# FASCICULE DE BREVET EUROPEEN

(11) **EP 2 193 037 B1**
(45) Date de publication et mention de la délivrance du brevet: **29.06.2011**
(21) Numéro de dépôt: 08835759.5
(22) Date de dépôt: 24.07.2008
(51) Int. Cl.: B60C 11/00, B60C 11/02

(54) **PNEUMATIQUE A SOMMET DE STRUCTURE SIMPLIFIEE**
REIFEN MIT EINER ABDECKUNG AUS EINER VEREINFACHTEN STRUKTUR
TYRE WITH A CROWN OF SIMPLIFIED STRUCTURE

(30) Priorité: 25.09.2007 FR 0706714
(43) Date de publication de la demande: 09.06.2010
(73) Titulaire: Société de Technologie MICHELIN, 63000 Clermont-Ferrand (FR); Michelin Recherche et Technique S.A., 1763 Granges-Paccot (CH)
(72) Inventeur: DEAL, Michel, F-03110 St.-Remy-en-Rollat (FR)
(74) Mandataire: Randl, Oliver Georg
(86) Numéro de dépôt international: PCT/FR2008/001106
(87) Numéro de publication internationale: WO 2009/044015

(56) Documents cités:
- FR-A- 2 553 719
- JP-A- 10 157 413
- JP-A- 58 073 409

## Description

L'invention concerne, de façon générale, l'équipement des véhicules à moteur.

Plus précisément, l'invention concerne un pneu comprenant une enveloppe étanche au moins partiellement réalisée en gomme et présentant un sommet et deux flancs, le sommet se raccordant à chacun des deux flancs et définissant une bande de roulement.

Des pneus de ce type sont par exemple décrits dans les documents de brevets JP 58 073 409, JP 10 157 413, et FR 2 553 719.

Les performances des pneumatiques actuels, notamment en termes de longévité, d'étanchéité et de résistance, sont aujourd'hui obtenues au prix d'une complexité élevée, tant pour ce qui concerne la structure matérielle de ces pneus que pour ce qui concerne les étapes et opérations à mettre en oeuvre pour leur fabrication.

L'invention, qui se situe dans ce contexte, a pour but de proposer un pneu qui, à performances égales, soit structurellement plus simple et sensiblement plus facile à fabriquer que les pneus actuels.

A cette fin, le pneu de l'invention, par ailleurs conforme à la définition générique qu'en donne le préambule ci-dessus, est essentiellement caractérisé en ce que le sommet comprend essentiellement une virole formée d'une feuille annulaire continue et étanche, sur laquelle sont adhérisés des pavés de gomme constituant la bande de roulement.

La virole est avantageusement constituée d'un métal ou d'un alliage métallique, et par exemple constituée d'acier inoxydable ou d'un alliage d'aluminium. Néanmoins, cette virole peut aussi être réalisée dans un matériau composite formé de fibres noyées dans une matrice de résine telle que le résorcinol-formaldéhyde-latex, les fibres étant constituées de verre, de carbone, ou d'un polymère appartenant à la famille du polyester, du polyéthylène, du polyamide, de l'aramide, ou du polyvinylalcool.

Dans tous les cas, il est préférable que la virole soit formée d'une surface totalement connexe.

La feuille formant la virole peut présenter une épaisseur sensiblement constante sur toute sa surface.

En toute hypothèse, cette feuille peut aussi présenter des reliefs locaux régulièrement répartis sur une partie au moins de sa surface, se répétant suivant une distribution monodirectionnelle ou bidirectionnelle.

En particulier, cette feuille peut présenter des ondulations dont chacune s'étend parallèlement à l'axe du pneu, ou des ondulations dont chacune s'étend dans un plan transversal à l'axe du pneu.

D'autres caractéristiques et avantages de l'invention ressortiront clairement de la description qui en est faite ci-après, à titre indicatif et nullement limitatif, en référence aux dessins annexés, dans lesquels :

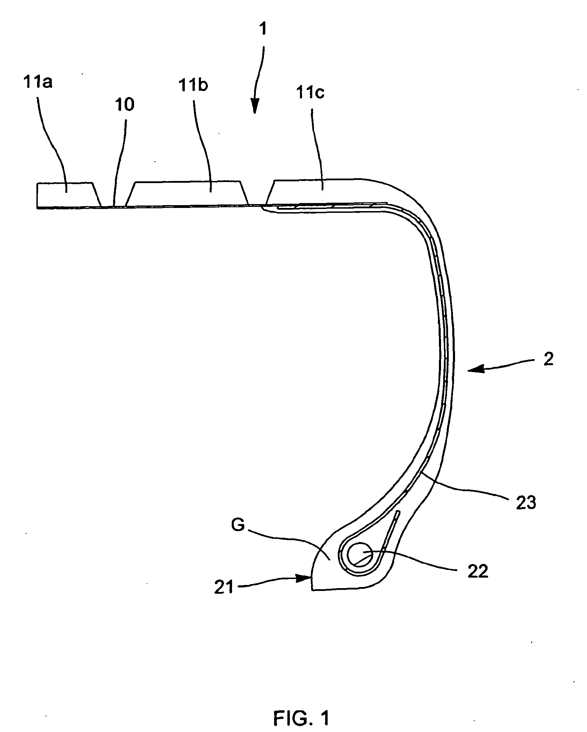

- la figure 1 est une vue partielle en coupe d'un pneu conforme à l'invention, la coupe étant réalisée suivant un plan passant par l'axe de ce pneu;

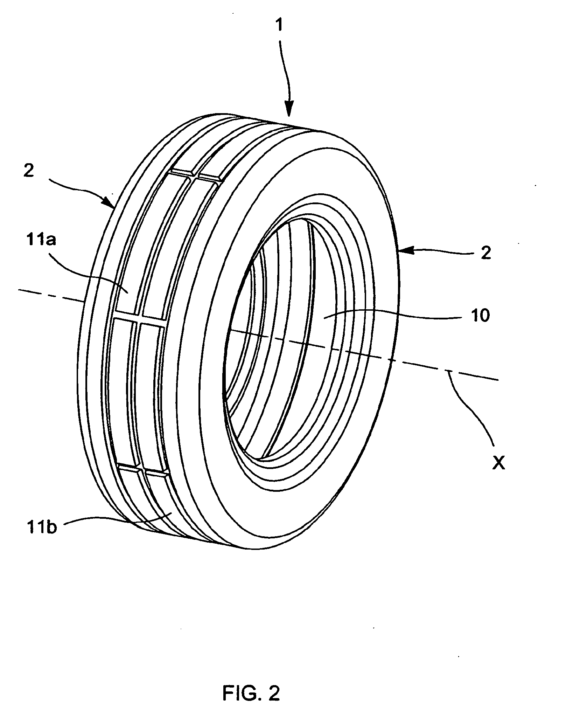

- la figure 2 est une vue en perspective, à plus petite échelle, du pneu illustré sur la figure 1
- la figure 3 est une vue en perspective partielle d'une virole utilisable dans un pneu conforme à l'invention et correspondant à un premier mode de réalisation possible;
- la figure 4 est une vue en perspective partielle d'une virole utilisable dans un pneu conforme à l'invention et correspondant à un deuxième mode de réalisation possible; et
- la figure 5 est une vue en perspective d'une virole utilisable dans un pneu conforme à l'invention et correspondant à un troisième mode de réalisation possible.

Comme annoncé précédemment, l'invention concerne un pneumatique essentiellement considéré du point de vue de sa structure.

Le pneu 1 de l'invention comprend de façon classique une enveloppe étanche au moins partiellement réalisée dans une gomme G formée de mélanges caoutchoutés, cette enveloppe présentant un sommet 1 et deux flancs 2.

Le sommet 1, qui définit la bande de roulement du pneu, se raccorde à chacun des deux flancs 2.

Par exemple, chaque flanc 2, qui est bordé par un talon interne 21 renforcé par une tringle circulaire 22, est formé de gomme G et d'une armature composée de fibres 23.

Chacune de ces fibres 23 est liée au sommet 1 par l'une de ses extrémités, et repliée sur la tringle 22 par son autre extrémité.

Selon l'invention, le sommet 1 comprend essentiellement une virole 10 et des pavés de gomme, tels que 11a, 11b, et 11c, qui sont adhérisés sur la virole 10 et qui constituent la bande de roulement du pneu.

La virole 10 est formée d'une feuille annulaire continue et étanche, par exemple constituée d'un métal ou d'un alliage métallique.

Cette virole 10 peut ainsi notamment être constituée d'acier inoxydable ou d'un alliage d'aluminium.

Cependant, la virole 10 peut aussi être réalisée dans un matériau composite formé de fibres noyées dans une matrice de résine.

A titre d'exemple non limitatif, la résine peut être du résorcinol-formaldéhyde-latex, et les fibres peuvent être constituées de verre, de carbone, ou d'un polymère appartenant à la famille du polyester, du polyéthylène, du polyamide, de l'aramide, ou du polyvinylalcool.

Dans tous les cas, il est préférable de faire en sorte que la virole 10 soit formée d'une surface totalement connexe.

On rappelle qu'une surface totalement connexe est une surface dont deux parties quelconques sont nécessairement liées entre elles.

Ainsi, dans le cas de l'utilisation d'un matériau composite, la matrice de résine enrobe les fibres en assurant à la fois la cohésion de ces fibres dans la virole, et l'étanchéité de cette virole.

La feuille formant la virole 10 présente avantageusement une épaisseur sensiblement constante sur toute sa surface.

Que ce soit ou non le cas, la feuille formant la virole 10 peut en toute hypothèse présenter des reliefs locaux régulièrement répartis sur une partie au moins de sa surface, et se répétant suivant une distribution monodirectionnelle ou bidirectionnelle.

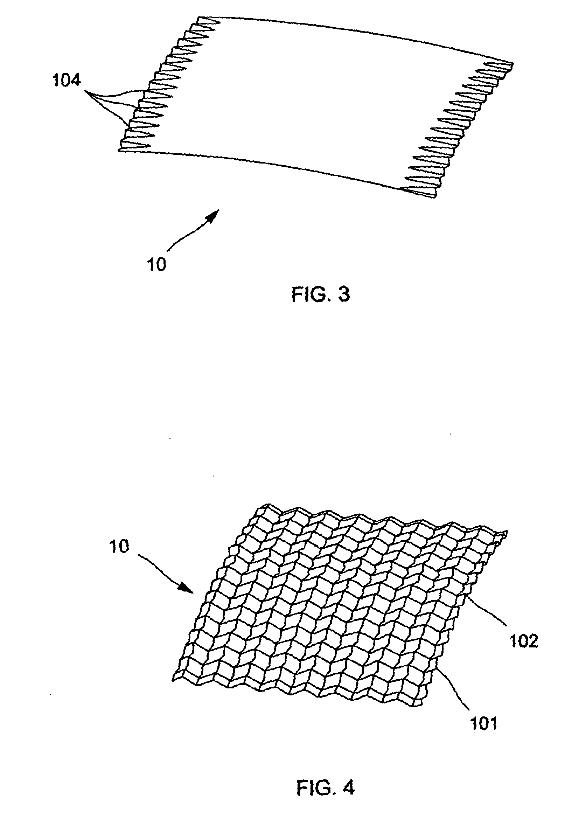

Ainsi, dans le mode de réalisation illustré à la figure 3, la feuille formant la virole 10 présente, au moins à proximité de chacun des flancs 2, des ondulations 104 dont chacune s'étend parallèlement à l'axe X du pneu.

Dans ce cas, le diamètre extérieur de la virole 10 au niveau de ses épaules, c'est-à-dire à proximité des flancs 2, peut être inférieur ou égal au diamètre extérieur que présente cette virole dans sa partie centrale.

Dans le mode de réalisation illustré à la figure 4, la feuille formant la virole 10 présente localement des creux 101 et des bosses 102 répartis sur toute sa surface et se répétant suivant une distribution bidirectionnelle.

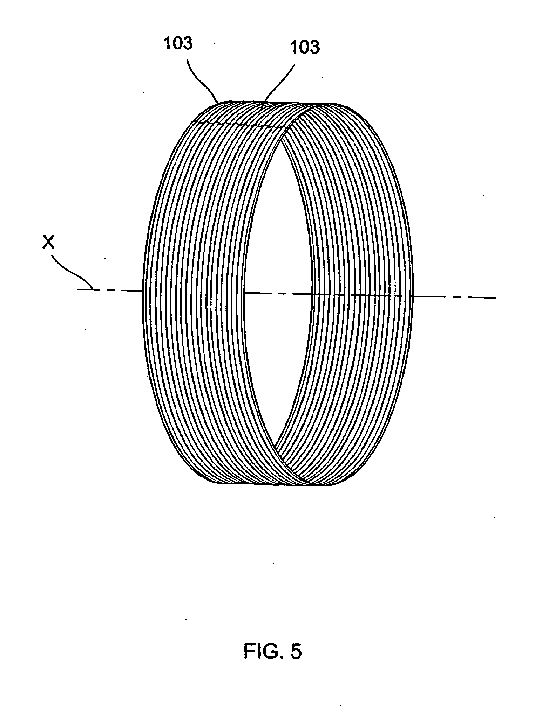

Et dans le mode de réalisation illustré à la figure 5, la feuille formant la virole 10 présente, sur toute sa surface, des ondulations 103 dont chacune s'étend dans un plan transversal à l'axe X du pneu.

Dans un pneu conforme à l'invention, le sommet est significativement allégé et simplifié dans la mesure où tous les renforts traditionnels d'un pneu sont remplacés par une virole préférablement mince, continue, étanche et résistante aux agressions chimiques et mécaniques, sur laquelle les reliefs de la bande de roulement sont adhérisés directement, et qui est placée juste au niveau du fond de la sculpture du pneu.

Tous les autres mélanges utilisés dans les pneus actuels (sous-couche, gommes de calandrage, butyle, etc...) sont ainsi éliminés.

La virole 10 peut donc être visible à l'intérieur du pneumatique dans sa partie centrale, et à l'extérieur, au fond des sillons.

Parmi les multiples avantages que présente un pneu conforme à l'invention, on peut notamment citer :
- une économie de mélanges et donc une meilleure performance en résistance au roulement;
- une meilleure évacuation des calories en provenance des épaules et un meilleur échange thermique avec l'extérieur par le fond des sillons;
- une maximisation de la profondeur des sillons et donc de leur section et de leur performance sur sol mouillé;
- une isolation des reliefs tels que 11a, 11b, et 11c de la bande de roulement, permettant d'éviter la migration vers chaque relief de produits des mélanges utilisés pour les reliefs avoisinants et autorisant ainsi l'utilisation de mélanges de couleur, jusqu'à l'échelle de chacun des pavés élémentaires adhérisés sur la virole 10;
- un meilleur vieillissement des mélanges de la bande de roulement;
- une résistance accrue du sommet du pneu à la perforation; et
- une amélioration significative du pneu, résultant du

fait que la virole, contrairement à la gomme, peut présenter une étanchéité parfaite.

## Revendications

1. Pneu comprenant une enveloppe étanche au moins partiellement réalisée en gomme et présentant un sommet (1) et deux flancs (2), le sommet (1) se raccordant à chacun des deux flancs (2) et définissant une bande de roulement, **caractérisé en ce que** le sommet (1) comprend essentiellement une virole (10) formée d'une feuille annulaire continue et étanche, sur laquelle sont adhérisés des pavés de gomme (11a, 11b, 11c) constituant la bande de roulement.

2. Pneu suivant la revendication 1, **caractérisé en ce que** la virole (10) est constituée d'un métal ou d'un alliage métallique.

3. Pneu suivant l'une quelconque des revendications 1 et 2, **caractérisé en ce que** la virole (10) est constituée d'acier inoxydable.

4. Pneu suivant l'une quelconque des revendications 1 et 2, **caractérisé en ce que** la virole (10) est constituée d'un alliage d'aluminium.

5. Pneu suivant la revendication 1, **caractérisé en ce que** la virole (10) est réalisée dans un matériau composite formé de fibres noyées dans une matrice de résine telle que le résorcinol-formaldéhyde-latex, les fibres étant constituées de verre, de carbone, ou d'un polymère appartenant à la famille du polyester, du polyéthylène, du polyamide, de l'aramide, ou du polyvinylalcool.

6. Pneu suivant l'une quelconque des revendications précédentes, **caractérisé en ce que** la virole (10) est formée d'une surface totalement connexe.

7. Pneu suivant l'une quelconque des revendications précédentes, **caractérisé en ce que** la feuille formant la virole (10) présente une épaisseur sensiblement constante sur toute sa surface.

8. Pneu suivant l'une quelconque des revendications précédentes, **caractérisé en ce que** la feuille formant la virole (10) présente des reliefs locaux (101, 102, 103, 104) régulièrement répartis sur une partie au moins de sa surface, se répétant suivant une distribution monodirectionnelle ou bidirectionnelle.

9. Pneu suivant la revendication 8, **caractérisé en ce que** la feuille formant la virole (10) présente des ondulations (104) dont chacune s'étend parallèlement à l'axe (X) du pneu.

10. Pneu suivant la revendication 8, **caractérisé en ce que** la feuille formant la virole (10) présente des ondulations (103) dont chacune s'étend dans un plan transversal à l'axe (X) du pneu.

## Claims

1. Tyre comprising an airtight envelope at least partially made of rubber and having a crown (1) and two side walls (2), the crown (1) being connected to each of the two side walls (2) and defining a tread, **characterized in that** the crown (1) essentially comprises a ring (10) formed from a continuous and airtight annular sheet, adhered to which are slabs of rubber (11a, 11b, 11c) constituting the tread.

2. Tyre according to Claim 1, **characterized in that** the ring (10) consists of a metal or of a metal alloy.

3. Tyre according to either one of Claims 1 and 2, **characterized in that** the ring (10) consists of stainless steel.

4. Tyre according to either one of Claims 1 and 2, **characterized in that** the ring (10) consists of an aluminium alloy.

5. Tyre according to Claim 1, **characterized in that** the ring (10) is made from a composite formed from fibres embedded in a resin matrix such as a resorcinolformaldehyde-latex matrix, the fibres consisting of glass, carbon or a polymer belonging to the polyester, polyethylene, polyamide, aramid or polyvinyl alcohol family.

6. Tyre according to any one of the preceding claims, **characterized in that** the ring (10) is formed from a completely connected surface.

7. Tyre according to any one of the preceding claims, **characterized in that** the sheet forming the ring (10) has a substantially constant thickness over its entire surface.

8. Tyre according to any one of the preceding claims, **characterized in that** the sheet forming the ring (10) has local reliefs (101, 102, 103, 104) evenly spread over at least one portion of its surface, which are repeated with a unidirectional or bidirectional distribution.

9. Tyre according to Claim 8, **characterized in that** the sheet forming the ring (10) has corrugations (104), each of which extends parallel to the axis (X) of the tyre.

10. Tyre according to Claim 8, **characterized in that** the sheet forming the ring (10) has corrugations (103), each of which extends in a plane transverse to the axis (X) of the tyre.

## Patentansprüche

1. Reifen mit einer dichten Hülle, die zumindest teilweise aus Gummi hergestellt ist und einen Scheitel (1) und zwei Flanken (2) aufweist, wobei der Scheitel (1) an jede der zwei Flanken (2) anschließt und einen Laufstreifen definiert, **dadurch gekennzeichnet, dass** der Scheitel (1) hauptsächlich einen Ring (10) enthält, der von einer durchgehenden und dichten ringförmigen Folie gebildet wird, an der den Laufstreifen bildende Gummiblöcke (11a, 11b, 11c) haftend befestigt sind.

2. Reifen nach Anspruch 1, **dadurch gekennzeichnet, dass** der Ring (10) aus einem Metall oder aus einer Metalllegierung besteht.

3. Reifen nach einem der Ansprüche 1 und 2, **dadurch gekennzeichnet, dass** der Ring (10) aus rostfreiem Stahl besteht.

4. Reifen nach einem der Ansprüche 1 und 2, **dadurch gekennzeichnet, dass** der Ring (10) aus einer Aluminiumlegierung besteht.

5. Reifen nach Anspruch 1, **dadurch gekennzeichnet, dass** der Ring (10) aus einem Verbundmaterial hergestellt wird, das von in eine Matrix aus Harz, wie Resorcin-Formaldehyd-Latex, eingebetteten Fasern geformt wird, wobei die Fasern aus Glas, Kohlenstoff oder einem Polymer bestehen, das zu der Familie der Polyester, Polyethylene, Polyamide, Aramide oder Polyvinylalkohole gehört.

6. Reifen nach einem der vorhergehenden Ansprüche, **dadurch gekennzeichnet, dass** der Ring (10) von einer vollständig zusammenhängenden Fläche geformt wird.

7. Reifen nach einem der vorhergehenden Ansprüche, **dadurch gekennzeichnet, dass** die den Ring (10) bildende Folie über ihre ganze Fläche eine im Wesentlichen konstante Dicke aufweist.

8. Reifen nach einem der vorhergehenden Ansprüche, **dadurch gekennzeichnet, dass** die den Ring (10) bildende Folie gleichmäßig über mindestens einen Teil ihrer Fläche verteilte, lokale Reliefs (101, 102, 103, 104) aufweist, die sich gemäß einer unidirektionalen oder zweidirektionalen Verteilung wiederholen.

9. Reifen nach Anspruch 8, **dadurch gekennzeichnet, dass** die den Ring (10) bildende Folie Welligkeiten (104) aufweist, von denen jede sich parallel zur Achse (X) des Reifens erstreckt.

10. Reifen nach Anspruch 8, **dadurch gekennzeichnet, dass** die den Ring (10) bildende Folie Welligkeiten (103) aufweist, von denen jede sich in einer Querebene zur Achse (X) des Reifens erstreckt.
